Europäisches Patentamt

European Patent Office

Office européen des brevets

(19)

(11) Publication number: **0 095 936 B1**

# EUROPEAN PATENT SPECIFICATION

(12)

(45) Date of publication of patent specification: 20.03.91   (51) Int. Cl.⁵ **H04N 1/08**

(21) Application number: **83303137.0**

(22) Date of filing: **01.06.83**

(54) **Scanning apparatus and method.**

(30) Priority: **02.06.82 US 384366**

(43) Date of publication of application:
**07.12.83 Bulletin  83/49**

(45) Publication of the grant of the patent:
**20.03.91 Bulletin  91/12**

(84) Designated Contracting States:
**AT BE CH DE FR GB IT LI LU NL SE**

(56) References cited:
**US-A- 3 293 657**
**US-A- 3 958 250**
**US-A- 4 262 594**

(73) Proprietor: **Crosfield Data Systems, Inc.**
**7942, Cluny Court**
**Springfield Virginia 22153(US)**

(72) Inventor: **Rossini, Ernest W.**
**6411 Rivington Road**
**Springfield Virginia 22152(US)**

(74) Representative: **Arthur, George Fitzgerald et al**
**KILBURN & STRODE 30, John Street**
**London WC1N 2DD(GB)**

## Description

This invention relates generally to scanning apparatus and scanning methods for example for scanning sheet material whether for reading it or writing on it by means of laser beam for example when writing the pages of a newspaper.

One form of such scanning apparatus is disclosed in U.S. Patent Specification No US-A-4262594 published April 21st, 1981, and that specification teaches the idea of scanning sheet material by forming it into the surface of a cylinder and then scanning it by means of a laser beam on the axis of the cylinder and moving rotationally and translationally; a transport in the form of a flexible carrier for the sheet material to be scanned was moved by a drive into a scanning position in which the sheet material was in a cylindrical surface defined by locating the edges of the transport around spaced discs.

In that specification the apparatus for feeding the sheet material into and out of the scanning position was rather complicated in order to achieve the precise cylindrical shape that was necessary for accurate scanning, and an object of the present invention is to enable the sheet to be positioned accurately without having to have excessively complicated apparatus.

According to one aspect of the present invention, in a method of feeding a sheet to be scanned to a scanner arranged to operate with a scanning beam, having at least a rotational component of movement about an axis, the sheet is placed on a flexible transport and the transport and sheet are driven into a scanning position within a cylindrical drum and the outer curved face of the transport is held in intimate contact with the internal curved surface of the drum and the sheet material to be scanned is held against the inner curved face of the transport.

Preferably the sheet is placed on the transport while the transport is flat and generally horizontal and when the transport is in the scanner the curved surface of the location wall is in intimate contact with what was the lower surface of the transport when it was horizontal. Air suction means can be provided for retaining the transport in intimate contact with the location wall.

According to another aspect of the invention, scanning apparatus includes a scanner arranged to operate with a scanning beam having at least a rotational component of movement about an axis, a flexible transport for a support sheet to be scanned, and a drive arranged to move the transport and sheet into a scanning position; the scanner includes a drum having a precise internal cylindrical surface, and in the scanning position the sheet is maintained in cylindrical form by virtue of being maintained against one face of the transport, which is itself retained with its other face in intimate contact with the internal cylindrical surface of the drum.

The invention is related to the inventions, the subject of European Patent Applications EP-A-0096530 and EP-A-0095937 claiming respectively a double air thrust bearing arrangement for a rotating shaft in the scanner, and a bed and support arrangement for facilitating drive of a transport into the scanner and receiving a transport from the scanner after it has been scanned.

Rolon's U.S. Patent Specification No. US-A-3,958,250 discloses a system for supporting flexible film in a cylindrical surface for laser scanning. The surface is defined by a housing of a vacuum chamber used for sucking the film against the surface. In that proposal no transport carrier is used, and the film is itself sucked against a surface having vacuum openings, so that if the film is thin and flexible it is drawn into the openings and deformed.

The invention may be carried into practice in various ways and one embodiment will be described by way of example with reference to the accompanying drawings in which:-

FIGURE 1 is a view partly schematic and partly perspective, of a scanning and feeding device embodying the invention;

FIGURE 2 is a cross-sectional view of the rotating scanning means and the housing therefor;

FIGURE 3 is a side view of the scanning device and shows the means for moving the scanning device laterally;

FIGURE 4 is a top view of the means for moving the scanning device laterally

FIGURE 5 is a view partly in cross-section, of the rotating scanning device and its housing;

FIGURE 6 is a top view of a transport for carrying the materials to be scanned to the scanning system;

FIGURE 7 is a cross section of registration pin (159) and its support, taken along line 7-7 of FIGURE 6;

FIGURE 8 is a top view of a transport for performing the same function as the transport of FIGURE 6, except it shows certain modified forms of tapes for holding the materials to be scanned;

FIGURE 9 is a detailed view of a portion of FIGURE 8;

FIGURE 10 is another detailed view of a portion of FIGURE 8;

FIGURE 11 is a detailed view of still another portion of FIGURE 8;

FIGURE 12 is a detailed view of yet another portion of FIGURE 8;

FIGURE 13 is a top view of a table for holding a transport. This figure is composed of four sub-figures 13A, 13B, 13C and 13D which should be put together as shown in FIGURE 21 to show FIGURE 13;

FIGURE 14 is a rear view of the table (Figure 13) for the transport. This figure is composed of two sub-figures which are to be put together to produce FIGURE 14;

FIGURE 15 is a right side view of the table (Figure 13) for the transport. The two parts of this figure are to be put together along the match line;

FIGURE 16 is a left side view of the table (Figure 13) and its associated door;

FIGURE 17 shows a disc inside the drum together with means for positioning a transport in the drum (243);

FIGURE 18 shows further details of the means in the drum for positioning a transport;

FIGURE 19 is an exploded view of certain details of FIGURE 1;

FIGURE 20 is a cross-sectional view along line 20-20 of FIGURE 1; and

FIGURE 21 shows how the sub-drawings 13A, 13B, 13C and 13D are put together to form FIGURE 13. It also shows how sub-drawing 14A and 14B form FIGURE 14.

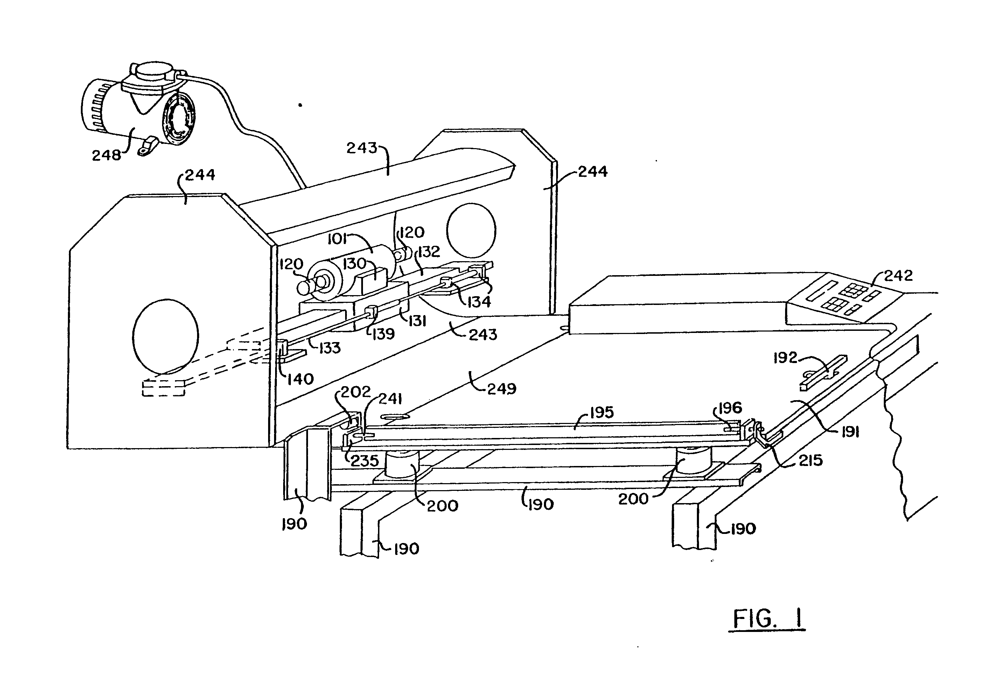

Before describing the overall machine in detail, a very brief description of it will be given with reference to FIGURE 1, as applied to the writing of pages for a newspaper.

FIGURE 1 is an overall schematic of the scanning device for reading and or writing using laser beams.

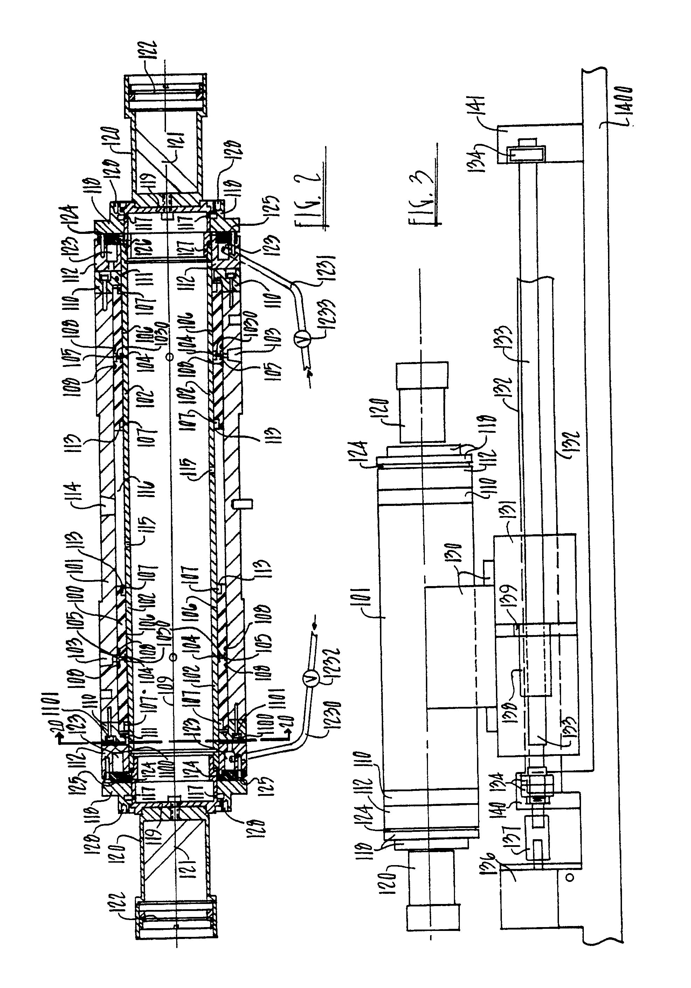

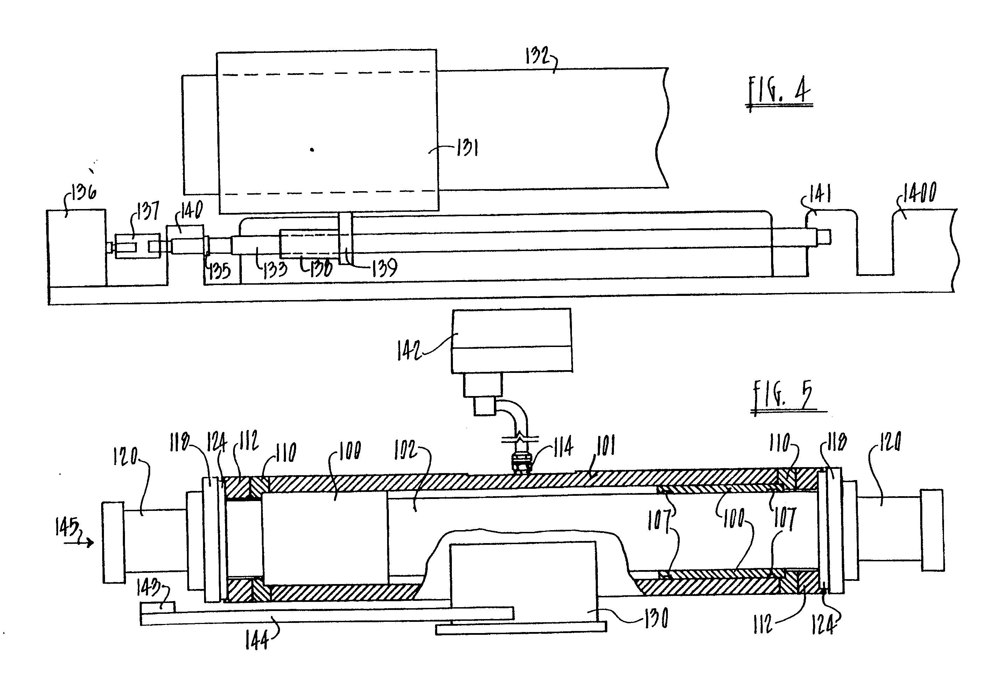

A cylinder drum (243) having side walls (244) carries support member (131) which in turn supports cradle (130) which in turn supports the housing (101) which contains rotating elements (120) with mirrors for reflecting the laser beams onto the materials to be read and or written upon. The mirrors provide scanning by rotational and translational movement. The rotary motion is achieved by virtue of turbines (118) (Figure 2) which are operated by compressed air fed into the housing (101). Linear motion of the housing (101) and with it the elements (120) is provided by a lead screw (133), which is rotated by a stepping motor (136). (shown in Figure 3) and which passes through the internally threaded housing (138) attached to the support (131) by a clamp (139). The lead screw (133) is supported by bearings (134) located in casings (140) and (141) on a base (1400).

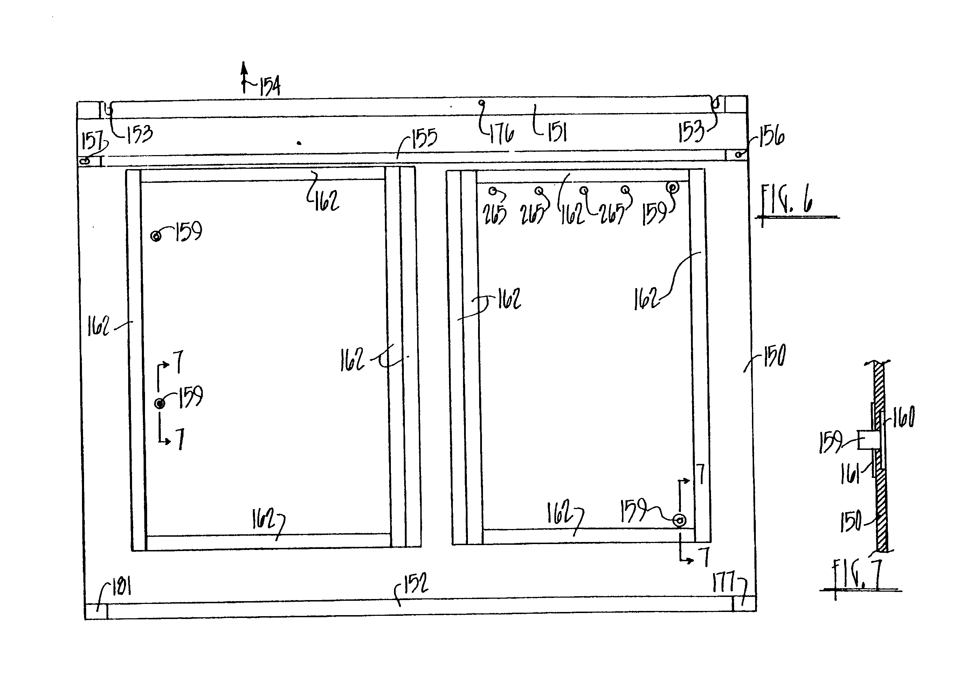

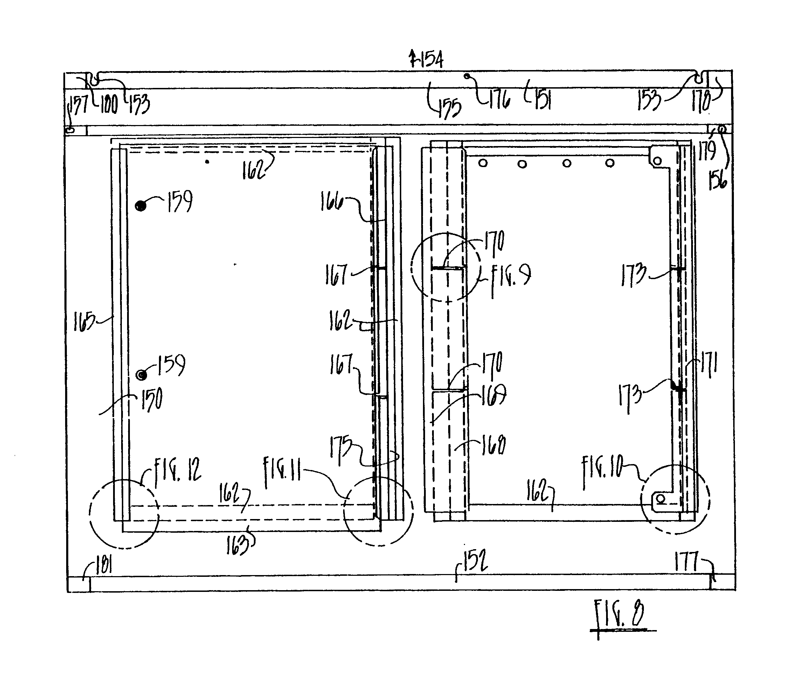

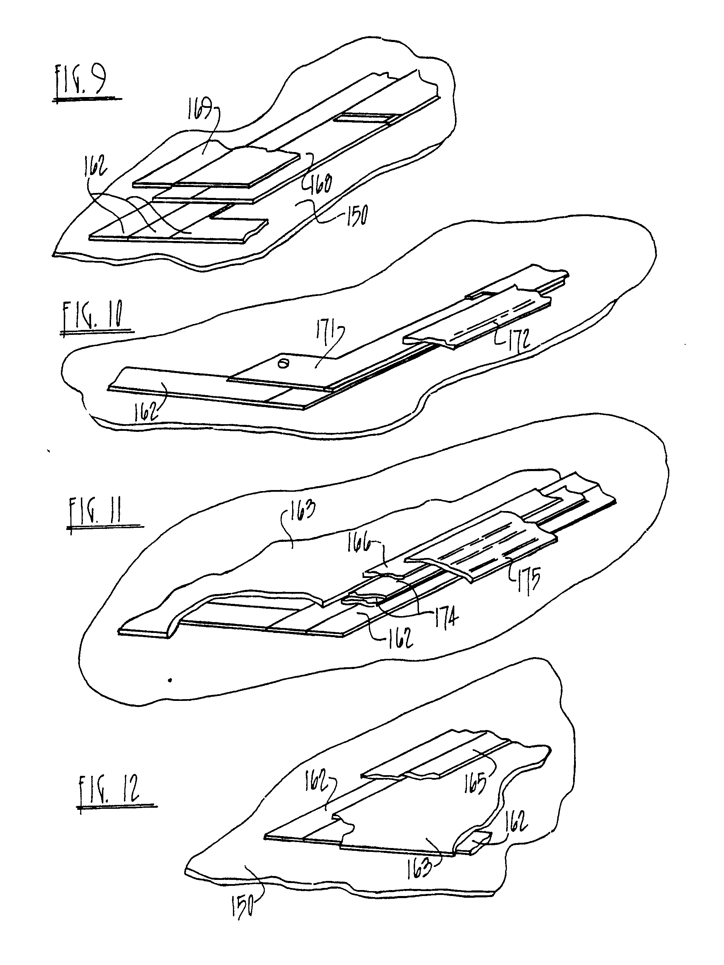

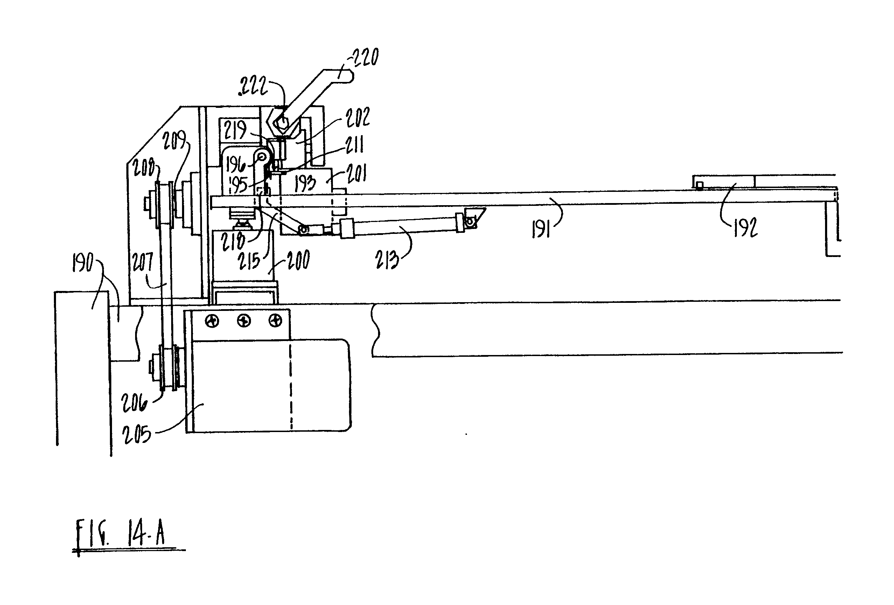

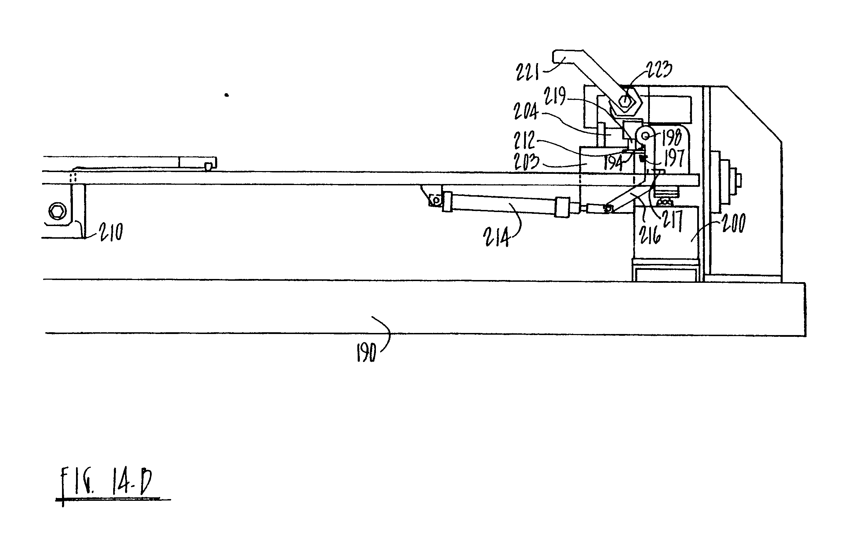

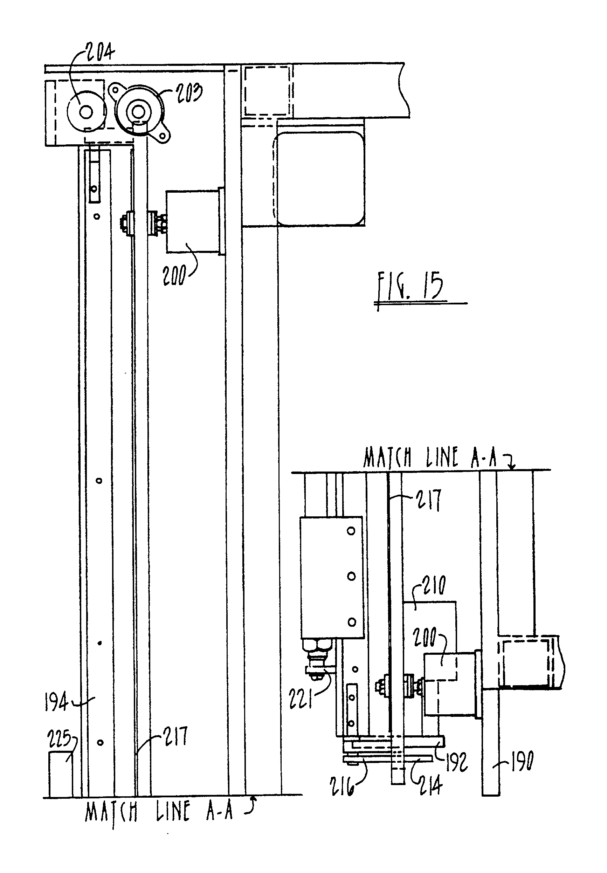

The reading and or writing material is placed on a transport (150) (Figure 6) which is placed on bed (191) in front of bar (192), (Figure 1). when it is desired to move the transport (150) (Figure 6), carrying the materials to be read and or to be written upon, into the drum (243), the bar (192) is moved forwardly a short distance which causes the transport plate (150) to pass to a group of pinch rollers ( one of which (202) is shown in Figure 1). These rollers drive the transport (150) into drum (243) as will be more fully explained. A second transport (150) having areas for reading and writing material may be placed on two L-section brackets (195,197) mounted at either side of the apparatus to pivot on shaft (196,198) on supports (235.236) as shown in Figure 13. After the first transport (150) has been fed into the drum (243) for the purposes of reading and/or writing, the second transport (150) may be dropped upon the bed (191) by rotating the bracket (195) and its corresponding bracket on the other side of the machine. The second transport (150) therefore, drops by gravity on the bed (191) and has the material for scanning placed on it. After reading and/or writing has been accomplished on the material on the first transport (150) that was sent into the drum (243), air is exhausted from cylinders (200) to lower bed (191) so that the horizontal sections of brackets (195) are at the level to receive the returned first transport (150) that was previously fed into the machine. The material in the reading and writing sections of the first transport (150); may then be changed to provide a new page for the newspaper after the second transport (150) has been loaded and the first transport (150) dropped. The cylinders (200) must be placed under air pressure, or relieved of air pressure. as necessary to position the bed (191) and brackets (195,197) correctly (Figure 13). When a transport (150) is to be fed into the drum (243), the bed (191) is in its raised position, and when the brackets (195,197) are to receive a transport (150) from the drum (243) the bed (191) is in its lower position.

Vacuum provided by a vacuum pump (248) is used to hold the transport (150) in place in the drum (243) during scanning.

A ramp (249) is provided between the bed (191) and the drum (243) for guiding the transport when passing to and from the drum (243).

SCANNING MEANS

A shaft (102) rotates in the housing (101) in air bearings (100) at each end of the housing (101) around the axis (109). Air under pressure from 5.6 to 7.0 Kgs per square cm is connected to input (103) and enters an annular slot (105) which completely encircles the outer portion of each bearing (100). The air under pressure also enters annular trough (104) through holes (1030), to thus provide an air bearing surface between the rotating shaft (102) and the bearing (100). This air gap (106) between bearing (100) and shaft (102) is approximately 0.007 cms wide. Movement of air along the gap (106) is restricted by annular seals (107) leaving a gap of 0.0005 cms. They are of Vespel manufactured by DuPont. 0 rings (108) prevent leakage of the air from the inlet (103). A cap (110) connected to the housing (101) has a vent (111) communicating with radial holes (1110) (Figure 20) whereby any air which leaks past seal (107) is vented to the atmosphere. Some air from the gap (106) also passes the seales (107) to space (113).

Figure 20 illustrates certain details of one of the caps (110) and shows a pair of diametrically-disposed axial-bores (1100) for bolts (1101) passing into the housing (101).

Air under presure controlled by a servo mechanism (142, Figure 5) flows through inlet (114) , the space (116), air ports (115), the interior of the shaft (102) and ports (117) to drive the air reaction turbines (118) , one at each end of the shaft.

The servo mechanism (142) (Figure 5) is a Series T5100 current-to-pressure transducer manufactured by Fairchild Industrial Products Division, 1501, Fairchild Drive, Winston-Salem, North Carolina. Preferably this apparatus is catalogue number T5120-1 having an input impedance of 2,340 ohms and an input range of 1 to 5 milliamperes. The turbines are rotated at each end of the housing (101) and their end plates (119) in turn rotate optical housings (120) , one at each end of the housing (101), which carry with them mirrors (121) and lenses (122), both of which, therefore, rotate at the same speed as the turbines (118).

One problem that has arisen in connection with air bearings such as the bearings (100) is that there is lateral movement between the housing and the rotating parts in this application, that would move the mirrors laterally and cause errors in reading and/or printing. Such movement is substantially avoided by the application of air under pressure at about 2.8 Kgs per square cm via feed lines (1230) and (1231) into annular cavities (123) defined in manifolds (112) secured at the ends of the housing, from each of which cavity air under pressure passes slowly through a bronze porous plate (124) secured to the outer face of the manifold, and applies pressure to an air gap of approximately 0.008 to 0.0012 cms between the porous plate (124) and the end surface (125) of the rotary turbine (118).

The air pressures in the cavities (123) are separately regulated by pressure regulators (1232) nd (1233), (Figure 2) which are adjusted experimentally to achieve maximum stability and maintain the housing centred between the turbines (118) by the air thrust bearings at the gaps (124,125).

Each end plate (119) on the turbine rotor is attached to the end of the shaft (102) by a ring (127) attached to the plate (119) and screwed into the threaded inner surface (126) of shaft (102).

Tapped holes (128) in the ends of plates (119) carry set screws for balancing the rotating mechanism mechanically.

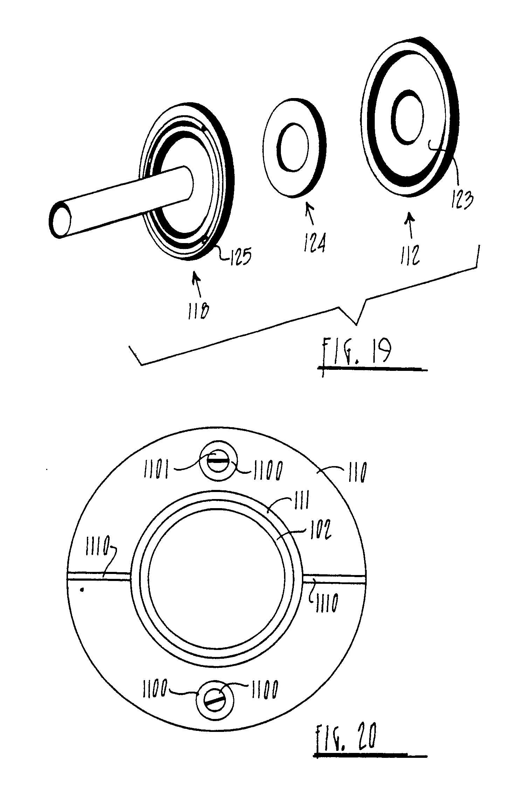

Figure 19 is an exploded view of the details of one of the bronze porous plates (124).

The end thrust can be substantially eliminated by adjustment of the pressure regulations controlling the air pressure in the gap between the thrust surfaces respectively at (125) on the turbine and at (124) on the porous plate.

A pick-off (not shown) gives a signal response to the speed of rotation of the shaft (102) for supply to the servo mechanism (142) to control the pressure supplied at (114) to tend to keep the shaft speed constant.

## DRIVE

Figure 3 shows the supporting mechanism for the apparatus shown in Figure 2. The housing (101) is supported by the cradle (130) which is mounted on the slide support (131), which is manufactured by Pneumo Precision, Inc, Precision Park, Keene, New Hampshire.

A stationary rail (132) supports the slide (131) by means of air pressure.

Running parallel to, and alongside the rail (132) is a lead screw (133) which is supported by a journal bearing (134) at the right hand end and a journal and thrust bearing (134) at the left hand end which co-operates with a collar (135) on the lead screw to prevent unwanted lateral movement. The lead screw (133) is rotated by stepping motor (136) through a coupling (137).

The stepping motor (136) may be model M83-62 series motor/driver manufactured by Compumotor Corporation, 1310, Ross Street, Petaluma, California. This has 25,000 steps per revolution, and a prefered speed of approximately 1 revolution per second. Using a 10 pitch lead screw (133), the apparatus of Figure 2 scans approximately 400 lines per cm during reading or writing. Following the scanning of a complete page, the stepping motor runs in reverse at a speed of approximately 6 revolutions per second in order to return the apparatus of Figure 2 to its starting position for a new scan.

The stepping motor is a synchronous motor so that the exact lateral position of the scanning system (Figure 2) at any given time can be determined electrically.

The preferred speed for the turbine (118) is 6,000 rpm whereby the mirrors rotate at that speed during scanning.

Figure 4 shows from above the stepping motor (136) driving the lead screw (133) in a lead screw nut (138), which is held by bracket (139) firmly attached to the support slide (131) which is carried by the rail (132) on an air bearing.

Figure 5 shows how in the device of Figure 2, a laser beam (145) enters axially from the left; it is focused by the lens (122) onto the mirror (121) (Figure 2) and as the mirror rotates, the laser beam is reflected to provide scanning. This beam periodically passes encoder (143) which receives one signal pulse for each revolution of the mirror (121) to be used for counting and synchronizing. The encoder (143) issupported by bracket (144) from the cradle (130) and repeats that pulse back through the optical system.

That beam is for the reading scan.

There is a similar laser beam arranged at the right hand end for the writing action.

TRANSPORT

Figure 6 shows a transport (150) for transporting the material which is to be read (usually one full page), or the laser plate upon which writing will occur in the direction of the arrow 154 into the drum of the machine. The transport (150) is basically a sheet of epoxy glass NEMA G-10, which is flexible so it can follow the inner curved surface of the drum (243) shown in Figure 1. The sheet (150) has metal strips (151) and (152) along its forward and rear ends. The forward strip (151) has indents (153) for the purpose of coarse registration. Precise registration is achieved by a metal strip (155) having a registration hole (156) near its right end and a registration slot (157) near its left end.

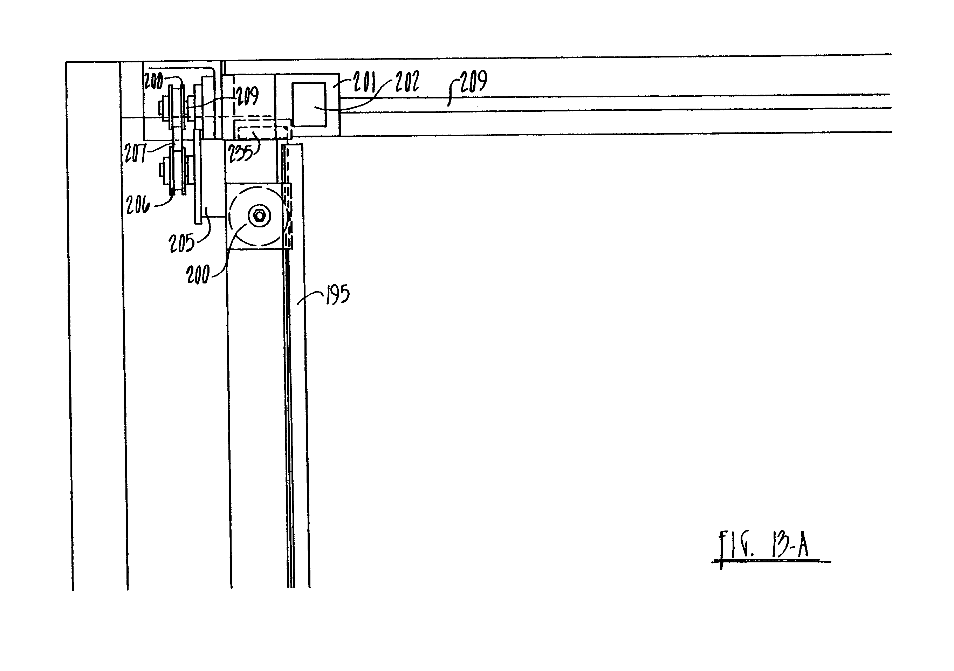

Registration pins (159), for locating printing plates and paste-ups, project up from the sheet (150) as shown in FIGURE 7). Each pin (159) has a base (160) and a washer (161) to hold it in place.

A number of strips (162) of polyurethane tape define the areas for the reading and writing materials. Strips (162) serve basically as a vacuum barrier sealing in place the material on which reading or writing is to be undertaken.

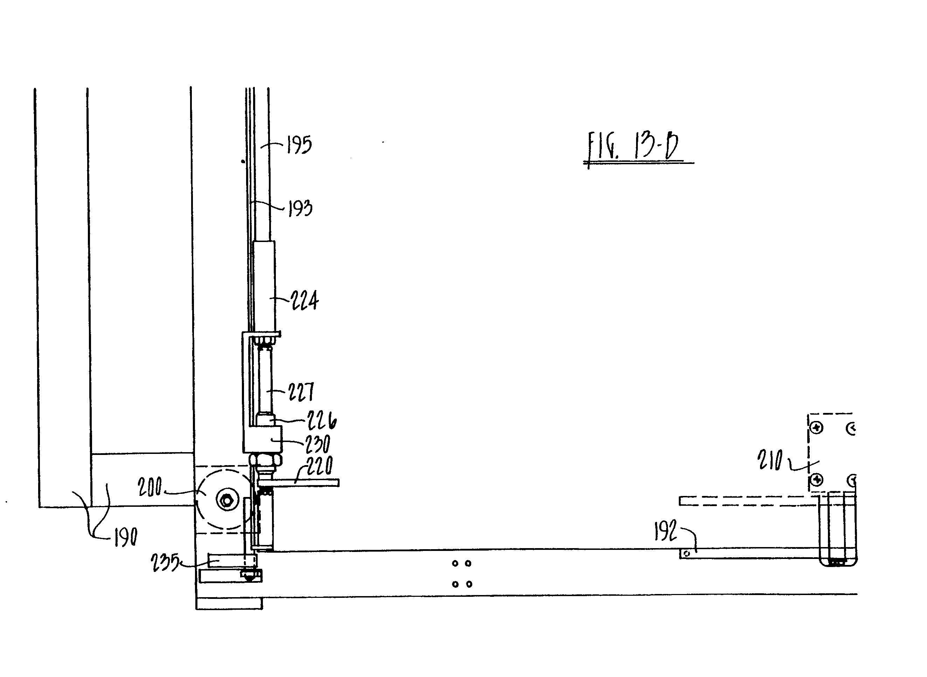

A page of material which is to be converted into a printing plate is placed in the reading section, which is the left-hand rectangular section of Figure 6 bounded by tape (162), and a sheet of Plexiglas (163) (Figure 8) having clearance holes (164) for the pins (159), is applied on top of the material.

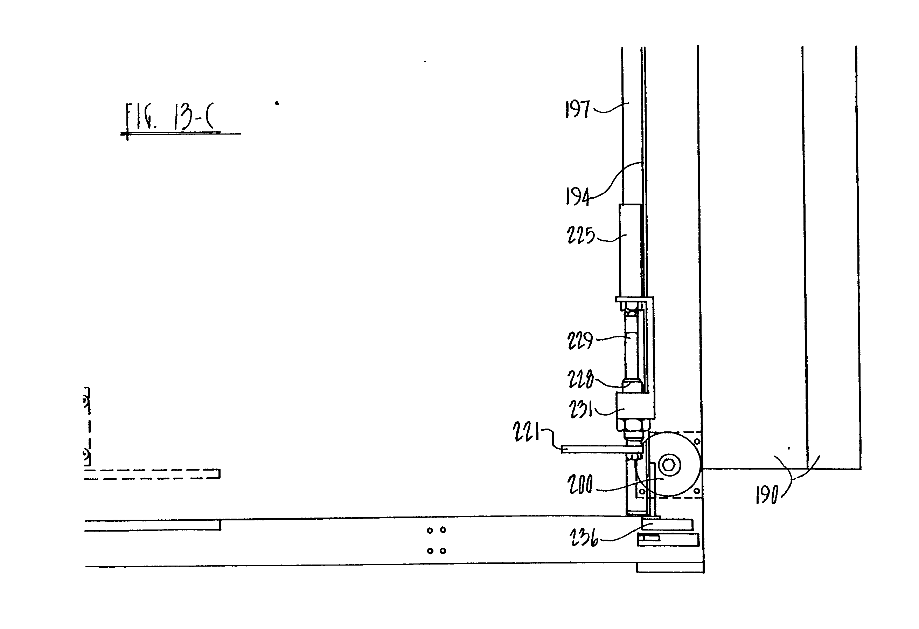

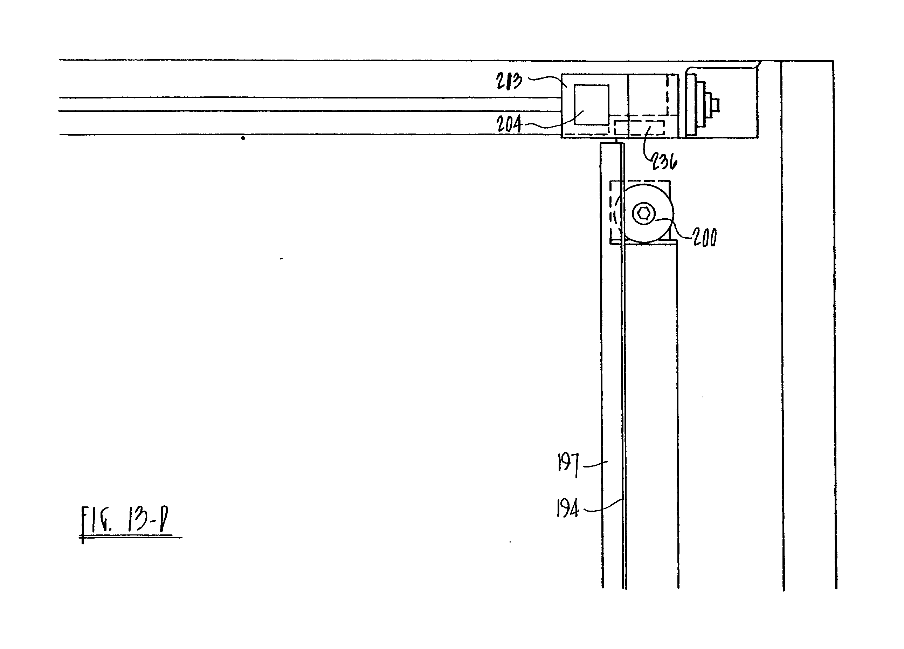

A strip of tape (165) (Figures 8 and 12) acts as a hinge and enables the Plexiglas sheet (163) to be opened like a book for the insertion or removal of material to be read. At the right edge of the Plexiglas sheet (163), a flap (166) (Figure 11) is securely bonded to the glass epoxy sheet (150); it is not bonded or sealed to the Plexiglas sheet (163) and constitutes a flap which may be used to cover the right edge of the Plexiglas sheet (163). The Plexiglas sheet (163) is transparent and non-polarised. The flap (166) has slits (167) to prevent buckling when the epoxy glass sheet (150) is curved. The flaps hold the materials against the transport (150) as it curves into the drum (243).

Figure 9 is a detail of the right hand section which is used to hold the output material ( such as a printing plate or lasermask) on which writing may take place. The strips of tape (162) serve the same function for the writing (right hand) rectangle as they did for the reading (left-hand) rectangle. They are covered by a flap (168) which is secured to the epoxy sheet (150) by tape (169). Slits (170) are provided to prevent buckling.

A flexible thin aluminium plate is positioned on the epoxy sheet (150) beneath the output material and is held along its left edge by flap (168). Its right edge is held by flap (171) (Figure 10).

Flap (171) is hinged by a piece of tape (172) so that the flap may be raised out of the way so that the aluminium plate and the output material can be placed in position and their left and right hand edges covered by flaps (168) and (171), so that the transport sheet (150) and the elements held by that sheet, are ready for movement into position for reading and writing.

Figure 11 shows the rear right hand corner of the Plexiglas sheet (163). Two strips of tape (174) are applied over the top of strip (162) so that the three strips of tape (162) and (174) equal the thickness of the Plexiglas sheet (163). The flap (166) is placed on top of tape (174) and is held in place by the strip of tape (175) which acts as a hinge for strip (166).

The rear left hand corner of the Plexiglas sheet (163) as shown in Figure 12, overlaps the tape (162) and is hinged to the sheet (150) by the strip of tape (165).

A position-sensing magnet (176) is located on the leading strip (151).

The ends (177), (178), (180) and (181) of the leading and rear strips (155) and (152) are thinner than the remainder for engagement by a pinch roller for driving the sheet (150) into position.

Two identical transports (150) of the type shown in Figures 6 and 8 are normally used. The one which is first fed into the drum (243) will be called the first transport (150) and the other one will be called the second transport.

TABLE

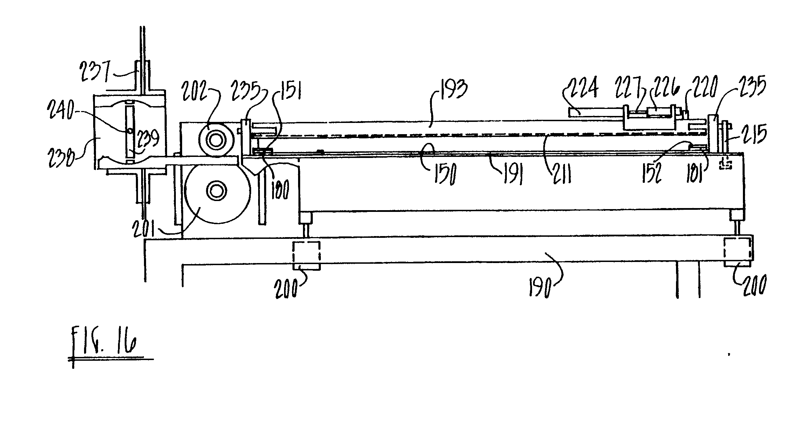

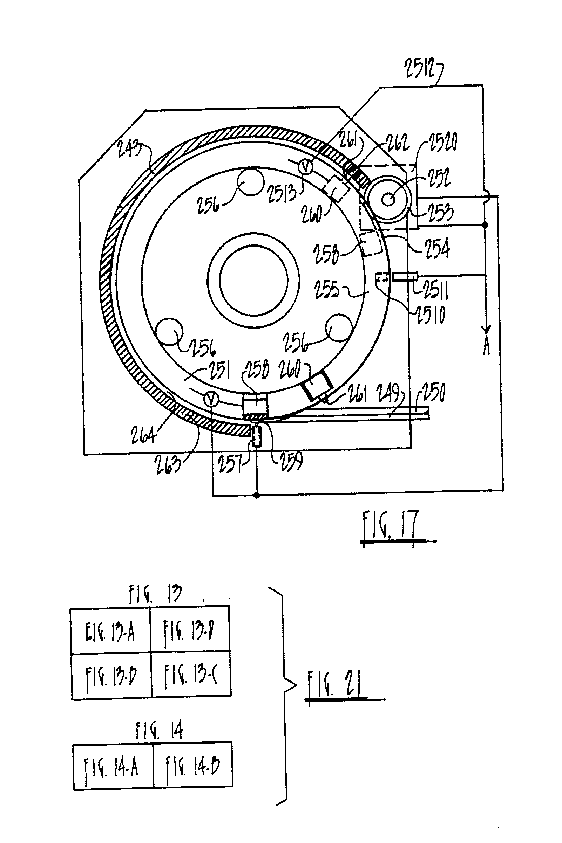

Figures 13, 14, 15 and 16 show the table on which the transport (150) of Figure 6 is mounted before being fed into the machine for reading or writing. The bed (191) of the table is supported above the frame (190) of the equipment with the bar (192) at its rear edge. The bar has a normal (rear) position shown in full lines and a forward position shown in dotted lines. The rear end of metal strip (152) of the transport (150) (Figure 6) is placed on the table directly in front of bar (192) when the latter is in its rear (full-line) position. The overall width of the transport (150) (Figure 6) is slightly less than the distance between the vertical members (193) and (194) of the brackets (195) and (197). The upper ends of the vertical members (193) and (194) are pivoted at (196) and (198) respectively. The length of transport (150), including strips (151) and (152) is slightly less than the lengths of brackets (195) and (197).

Four air cylinders (200) operate in synchronism to raise and lower the table. When there is air pressure in the upper sections of the four cylinders (200), the table bed (191) is in its lower position and when air pressure is applied to the lower section of the four cylinders the bed (191) moves to an upper position about 2.5 cms above the lower position.

With the bed (191) in its upper position, the transport (150) resting directly on bed (191) is in the horizontal tangent plane where idle rollers (202,204) contact drive rollers (201) and (203) respectively in a pinch roller arrangement.

A motor (205) drives timing pulley (206) carrying a belt (207) for turning the driving rollers (201) and (203).

With the first transport (150) in its normal position on bed (191) with the rear edge of strip (152) in contact with a forward end of the bar (192), air pressure is applied to a cylinder (210) to drive bar (192) to its forward position and to cause the forward end (151) of the first transport (150), to move into a position where the thin ends of strip (151) are pinched between the pairs of rollers,which are driven to feed the transport (150) into the drum (243).

Then a second transport (150) is laid on the shelves (211) and (212) of brackets (195) and (197). As soon as the first transport (150) is sensed as having registered into drum (243), air pressure is applied to cylinders (213) and (214) to cause arms (215) and (216), to rotate the brackets (195) and (197) outwardly about their pivots (196) and (198) so that the second transport (150) will fall from the brackets onto the bed (191) between guides (217) and (218).

The brackets (195) and (197) are now ready to receive the first transport (150) after it has been scanned in the drum.

To prepare for this the air is released from cylinders (200) to lower the bed (191) so the horizontal shelves (211) and (212) are at the same level as the horizontal plane of the pinch rollers. The first transport (150) that is returning from the drum is therefore at the same level as the shelves (211) and (212); the motor (205) is now reversed, and the first transport (150) is driven toward the rear of the brackets (195) and (197) with its upper face urged by brushes (219) against the upper surface of shelves (211) and (212). When the first transport (150) has left the rollers (201-204), its strip (152) has moved rearwardly beyond a pair of inward arms (220) and (221), which are pivoted at (222) and (223) about horizontal arms parallel with the direction of transport movement. The arms (220) and (221) pivot into contact with the epoxy glass on the first transport (150) and then they are moved rearwardly to drive the transport until the rear edge of strip (152) is above the forward edge of bar (192) in its rearward (solid line) lower position, (pressure has been removed from cylinder (210).

It will be recalled that the second of the two transports (150) has been dropped onto the table bed (191) in its lower position while the first transport (150) is being returned. The bed is now raised and the second transport (150) is fed into the scanning drum (243) in the same way. Cylinders (213) and (214) are operated to cause the first transport (150) to fall from the shelves (211) and (212) onto bed (191). The operator now replaces the paste-up material to be printed from the left hand section and replaces output material from the right hand section of the first transport (150).

The arms (220) and (221) are moved by Stilson Miniature Rota-clamps, each comprising a housing (226) and a shaft (227). The housing (226) is supported by a frame (230) which is part of the bracket (195). When the forward end of shaft (227) is pressed rearwardly by an air cylinder (224), the arm (220) first rotates until it contacts the first transport (150), and then it translates rearwardly until it moves the first transport (150) to its ultimate final position above the edge of bar (192). The second clamp (228,229,231,225) is similar.

DRUM

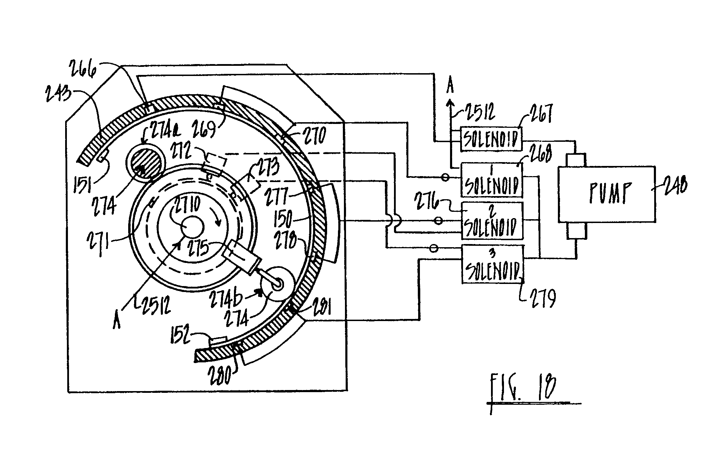

The drum (243) which is fed with a transport (150), is bounded by a wall (237) (Figure 16) which has an opening (238), covered by a door (239), pivoted at (240), for preventing the laser beam from causing injury. Whenever the door (239) is open for movement of a transport, a mercury switch operated by rotation of the shaft (240) de-energises a solenoid to move a shield ( not shown) to a position which prevents the laser beam from being directed toward the opening (238). When a transport (150) is not entering or leaving the drum (243), the door (239) is closed.

Figure 17 illustrates the apparatus at the left end of the drum. The ramp (249) has an upstanding flange (250) at each side thereof, to guide the transport into the drum (243). As the transport (150) enters the magnet (176) (Figure 6) on the transport (150) passes across sensor (257) which actuates an electrical circuit (2571) to apply air pressure to cylinder (258) which in turn moves shoulder screw (259) upwardly. The side walls of the left hand slot (153) in the forward strip (151) of the transport (150) straddle a pin 263 on a rotatable disc (251) so that when the shoulder screw (259) moves upwardly, it clamps the left end of strip (151) to the disc (251) (Figure 17). There is a similar arrangement at the right hand side of the drum The sensor (257) also energises a motor (2520) having a shaft (252) for rotating the disc (251) through gears (253) and (254) to move transport (150) along slot (264) to its final position.

Shortly after the disc (251) begins to rotate, a pin (261) on the drum engages registration hole (157) (see Figure 6) and thereby ensures that the transport is registered with the inside surface of the drum (243). In its final position, the pin (261) in the slot (157) is in alignment with hole (262) in the drum (243), whereupon air pressure is applied to cylinder (260) to press pin (261) through the hole (157) and into the hole (262) in order to hold the transport (150) and disc (251) in precise position in relation to the drum during scanning. The disc (251) is supported to rotate on rollers (256) about the drum (243) axis.

A magnet (2510) on the disc (251) in co-operation with a sensor (2511) controls a circuit (2512) for de-energising the motor (2520) and thus, stopping motor shaft (252) in a position where pin (261) registers with hole (262). Circuit (2512) controls a valve (2513) to admit air to cylinder (260) to move pin (261) into hole (262)

The disc (251), bearings (256), cylinders (258) and (260), shoulder screw (259) and registering pin (261), together with hole (262) are located along the left hand margin of the transport (150), within the drum, for the purpose of driving and registering the left hand portion of the transport (150). Similar devices are located at the right hand side of drum (243).

Figure 18 is a sectional view of the drum showing the vacuum system and is a view from the right hand side, as distinguished from Figure 17, which is a view from the left hand side.

In Figure 18, the transport (150) is shown in its final position with strip (151) at its forward end and strip (152) at its rear end and the registering pin (261) in hole (262)

The transport (150) has holes (265) (Figure 6) extending completely through the epoxy glass sheet (150) and located just below the upper piece of tape (162) for sealing the output material.

The aluminium plate which is used for making a printing plate extends from the lower piece of tape (162) (Figure 6) to the lower edge of the holes (265) so that there is a space between the upper end of the aluminium plate and the lower end of the upper strip of tape (162) and the holes (265) communicate with that space and are in alignment with a groove (266) which runs across the drum (243) parallel to the axis. The groove (266) is connected by tubing to a solenoid valve (267) which is in turn connected to one of two separate inputs of vacuum pump (248).

The output material (not shown) covers the air space between the upper edge of the aluminium plate and the lower edge of the forward strip of tape (162) and the vacuum created in groove (266) and extending through the holes (265) sucks the output material toward the epoxy glass plate (150) along a limited upper portion of the output material. The output material is held in position along its right and left hand sides, until vacuum is applied by the flaps (168) and (171) (Figure 10).

Solenoid valves (267) and (268) are controlled by an electrical circuit (2512) which causes these valves to open when the pin (261) is registered in the hole (262).

Grooves (269) and 270) run across drum (243) and apply vacuum to the upper part of the transport (150) to hold it firmly against the inside wall of drum (243). The vacuum for grooves (269) and 270) comes from the second input of the pump (248).

After the pin (261) has registered with hole (262) the following is the sequence of events. A cam (271) when it is normally at an angular position 180° from that shown, is not actuating either of two switches (272) and (273). A squeegee roller (274) is in its inward position (274a). Circuit (2512) starts motor (2710) for rotating the cam (271) clockwise. The squeegee roller (274) then moves outwardly into contact with the transport (150), under the force of air pressure fed into the cylinder (275). As the cam (271) rotates clockwise, the squeegee roller (274) similarly swings clockwise until it reaches the position (274b). Since the cam rotates clockwise, it first actuates switch (272) which energises solenoid valve (276) to allow vacuum to be applied to grooves (277) and (278), thus sucking another section of the transport (150) inwardly towards the inner wall of (243).

As the cam (271) rotates further in the clockwise direction, it energises switch (273) which energises solenoid valve (279) and applied vacuum to grooves (280 and 281). Like the other grooves, each of grooves (277,278,280 and 281) runs across the drum (243) parallel to the axis, and when vacuum is applied the transport (150) is sucked against the inner wall of the drum (243). As the cam (271) was rotating by about 160° the squeegee roller (274) has been held against the inner wall of the transport (150) and has applied pressure to press the transport (150) against the inner wall of the drum (243), to thus iron out any bubbles or other irregularities.

The suction through grooves (266,269, and 270) is applied as soon as the pin (261) registers with hole (262). At about the same time that the vacuum is applied to those grooves, the squeegee (274) is extended, and cam (271) and squeegee (274) begin rotating clockwise to first move the cam into position, and secondly start the squeegee pressing the transport against the inner wall of (243). The squeegee is so positioned with respect to the switches (272) and (273) that the squeegee passes over the portion of the transport (150) that is covered by vacuum grooves (270) and (278) before suction is applied to those grooves. Similarly, the squeegee (274) passes over the portion of transport (150) that is covered by grooves (280) and (281) before the vacuum is applied to those grooves.

After scanning has been completed, the air pressure to cylinder (275) is reversed and the squeegee (274) retracts. The solenoid valves (267,268,276 and 279) are then de-energised, and pin (261) is retracted from hole (262) by cutting off the air pressure to cylinder (260). The transport (150) is now free to be removed from the drum (243). The motor (2520) which is controlling disc (251) is then reversed and the transport (150) is then ejected from the drum.

## Claims

1. A method of feeding a sheet to be scanned to a scanner (120) arranged to operate with a scanning beam (145) having at least a rotational component of movement about an axis (109) in which the sheet is placed on a transport (150) in the form of a flexible carrier, and the transport (150) and sheet are driven into a scanning position within a cylindrical drum (243), characterised in that the outer curved face of the transport is held in intimate contact with the internal curved surface of the drum (243) and the sheet to be scanned is held against the inner curved face of the transport (150).

2. A method as claimed in Claim 1 in which the sheet is placed on the transport while the transport is flat and generally horizontal.

3. A method as claimed in either of the preceding claims in which the transport is held in contact with the internal curved surface of the location wall by suction means (266,269,270,248).

4. A method as claimed in any of the preceding claims in which the transport and sheet in the scanning position are located over their whole width.

5. Scanning apparatus including a scanner (120) arranged to operate with a scanning beam (145) having at least a rotational component of movement about an axis (109), a transport (150) in the form of a flexible carrier for supporting a sheet to be scanned, and a drive (205) arranged to move the transport and sheet into a scanning position, characterised in that the scanner includes a drum (243) having a precise internal cylindrical surface, and characterised in that in the scanning position the sheet is maintained in cylindrical form by virtue of being retained against one face of the transport, whilst is itself maintained with its other face in intimate contact with the internal cylindrical surface of the drum.

6. Apparatus as claimed in Claim 5 including a generally horizontal table (191) for supporting the transport adjacent the entry to the scanning position.

7. Apparatus as claimed in Claim 5 or Claim 6 including vacuum means (266,269,270,248) arranged to hold a face of the transport in intimate contact with the curved surface of the location wall.

8. Apparatus as claimed in any of Claims 5 to 7 including first and second spaced parallel discs (251) disposed to receive the outer ends of the leading edge of the transport as it is driven towards the scanning position, and arranged to rotate to wind the transport around the discs.

9. Apparatus as claimed in Claim 8 including transfer means (260) arranged to transfer the support for the transport from the discs to the curved surface of the location wall.

10. Apparatus as claimed in any of Claims 5 to 9 including squeeze means (274) for squeezing out air from between the transport and the curved surface of the location wall.

## Revendications

1. Procédé pour fournir une feuille à analyser à un scanneur (120) propre à opérer avec un faisceau d'analyse (145) comportant au moins une composante de rotation pouvant tourner autour d'un axe (109), dans lequel la feuille est placée sur un organe de transport (150) se présentant sous la forme d'un support flexible, l'organe de transport (150) et la feuille étant amenés dans une position d'analyse dans un tambour cylindrique (243), caractérisé en ce que la face courbe extérieure de l'organe de transport est maintenue en contact étroit avec la surface courbe intérieure du tambour (243) et la feuille à analyser est maintenue contre la face courbe intérieure de l'organe de transport (150).

2. Procédé suivant la revendication 1, dans lequel la feuille est placée sur l'organe de transport lorsque ce dernier est plat et généralement horizontal.

3. Procédé suivant l'une ou l'autre des revendications précédentes, dans lequel l'organe de transport est maintenu en contact avec la surface courbe intérieure de la paroi de localisation par des moyens d'aspiration (266, 269, 270, 248).

4. Procédé suivant l'une quelconque des revendications précédentes, dans lequel l'organe de transport et la feuille dans la position d'analyse sont localisés sur toute leur largeur.

5. Appareil d'analyse comprenant un scanneur (120) propre à opérer avec un faisceau d'analyse (145) comportant au moins une composante de rotation autour d'un axe (109), un organe de transport (150) se présentant sous la forme d'un support flexible pour soutenir une feuille à analyser et un dispositif d'entraînement (205) destiné à déplacer l'organe de transport et la feuille vers une position d'analyse, caractérisé en ce que le scanneur comprend un tambour (243) présentant une surface cylindrique intérieure précise et en ce que, dans la position d'analyse, la feuille est maintenue dans une forme cylindrique en vertu du fait qu'elle est retenue contre une face de l'organe de transport, qui est lui-même maintenu, par son autre face, en contact étroit avec la surface cylindrique intérieure du tambour.

6. Appareil suivant la revendication 5, comprenant une table généralement horizontale (191) pour soutenir l'organe de transport, disposée à proximité immédiate de l'entrée de la position d'analyse.

7. Appareil suivant la revendication 5 ou 6, comprenant des moyens d'aspiration (266, 269, 270, 248) agencés de manière à maintenir une face de l'organe de transport en contact étroit avec la surface courbe de la paroi de localisation.

8. Appareil suivant l'une quelconque des revendications 5 à 7, comprenant un premier et un second disque parallèles espacés (251) disposés de manière à recevoir les extrémités extérieures du bord antérieur de l'organe de transport lorsqu'il est entraîné vers la position d'analyse, et agencés de manière à tourner pour que l'organe de transport s'enroule autour des disques.

9. Appareil suivant la revendication 8, comprenant un moyen de transfert (260) propre à transférer le support pour l'organe de transport des disques vers la surface courbe de la paroi de localisation.

10. Appareil suivant l'une quelconque des revendications 5 à 9, comprenant un moyen de pression (274) pour expulser l'air présent entre l'organe de transport et la surface courbe de la paroi de localisation.

## Ansprüche

1. Verfahren zur Zuführung eines abzutastenden Blattes zu einer Abtastvorrichtung (120), die so ausgestaltet ist, daß sie mit einem Abtaststrahl (145) mit zumindest einer Drehbewegungskomponente um eine Achse (109) arbeitet, wobei das Blatt auf eine Transportvorrichtung (150) gelegt wird, die als flexibler Träger ausgebildet ist, und die Transportvorrichtung (150) und das Blatt in eine Abtastposition innerhalb einer zylindrischen Trommel (243) gebracht werden, **dadurch gekennzeichnet,** daß die äußere gebogene Fläche der Transportvorrichtung in engem Kontakt mit der inneren gebogenen Fläche der Trommel (243) gehalten wird und daß das abzutastende Blatt gegen die innere gebogene Fläche der Transportvorrichtung (150) gehalten wird.

2. Verfahren nach Anspruch 1, wobei das Blatt auf die Transportvorrichtung gelegt wird, wenn die Transportvorrichtung flach und im allgemeinen horizontal ist.

3. Verfahren nach einem der vorhergehenden Ansprüche, wobei die Transportvorrichtung durch Saugelemente (266, 269, 270, 248) in Kontakt mit der inneren gebogenen Fläche der Positionierungswand gehalten wird.

4. Verfahren nach einem der vorhergehenden Ansprüche, wobei die Transportvorrichtung und das Blatt in der Abtastposition entlang ihrer gesamten Breite positioniert werden.

5. Abtastapparat, umfassend eine Abtastvorrichtung (120), die so ausgestaltet ist, daß sie mit einem Abtaststrahl (145) mit zumindest einer Drehbewegungskomponente um eine Achse (109) arbeitet, eine Transportvorrichtung (150) zum Tragen des abzutastenden Blattes, die als flexibler Träger ausgebildet ist, und einem Antrieb (205), der so ausgestaltet ist, daß er die Transportvorrichtung und das Blatt in eine Abtastposition bewegt, **dadurch gekennzeichnet,** daß die Abtastvorrichtung eine Trommel (243) mit einer präzisen zylindrischen Innenfläche umfaßt und daß das Blatt in der Abtastposition in einer zylindrischen Form gehalten wird, indem es gegen eine Fläche der Transportvorrichtung gehalten wird, während es selber mit seiner anderen Seite in engem Kontakt mit der zylindrischen Innenfläche der Trommel gehalten wird.

6. Apparat nach Anspruch 5, umfassend einen im allgemeinen horizontalen Tisch (191) zur Lagerung der Transportvorrichtung, der an den Eingang des Abtastbereichs angrenzt.

7. Apparat nach Anspruch 5 oder 6, umfassend Unterdruckelemente (266, 269, 270, 248), die so ausgelegt ist, daß sie eine Fläche der Transportvorrichtung in engem Kontakt mit der gebogenen Fläche der Positionierungswand halten.

8. Apparat nach einem der Ansprüche 5 bis 7, umfassend erste und zweite mit Abstand zueinander angeordnete, parallele Scheiben (251), die so angeordnet sind, daß sie die äußeren Enden des vorderen Randes der Transportvorrichtung aufnehmen, während diese in Richtung zur Abtastposition bewegt wird, und die drehbar gelagert sind, um die Transportvorrichtung um die Scheiben herumzuwinden.

9. Apparat nach Anspruch 8, umfassend eine Übergabeeinrichtung (260), die so ausgestaltet ist, daß sie den Träger der Transportvorrichtung von den Scheiben auf die gebogene Fläche der Positionierungswand übergibt.

10. Apparat nach einem der Ansprüche 5 bis 9, umfassend eine Preßeinrichtung (274), um die Luft zwischen der Transportvorrichtung und der gebogenen Oberfläche der Positionierungswand herauszupressen.

FIG. 1

EP 0 095 936 B1

FIG. 2

FIG. 3

EP 0 095 936 B1

FIG. 4

FIG. 5

EP 0 095 936 B1

FIG. 6

FIG. 7

EP 0 095 936 B1

FIG. 8
FIG. 9
FIG. 10
FIG. 11
FIG. 12

FIG. 9

169

162

160

150

FIG. 10

171

172

162

FIG. 11

163

166

175

174

162

FIG. 12

162

165

162

163

150

FIG. 12-A

FIG. 13-b

FIG. 13-C

197

194

225

229

228

231

221

200

236

190

EP 0 095 936 B1

19

FIG. 13-P

EP 0 095 936 B1

FIG. 14-A

EP 0 095 936 B1

EP 0 095 936 B1

221   223
219
204
212
203   194   198   197
210   214   216   217   200
190

FIG. 14-D

204

203

200

FIG. 15

MATCH LINE A-A

217

210

200

221

194

225

217

216

214

192

190

MATCH LINE A-A

FIG. 16

EP 0 095 936 B1

FIG. 17

FIG. 13

| FIG. 13-A | FIG. 13-B |
|-----------|-----------|
| FIG. 13-D | FIG. 13-C |

FIG. 14

| FIG. 14-A | FIG. 14-B |
|-----------|-----------|

FIG. 21

FIG. 12

FIG. 19

FIG. 20